# EUROPEAN PATENT SPECIFICATION

(11) **EP 4 258 615 B1**
(45) Date of publication and mention of the grant of the patent: **03.09.2025**
(21) Application number: 22213408.2
(22) Date of filing: 14.12.2022
(51) Int. Cl.: H04L 47/11, H04L 47/12, H04L 47/28, H04L 47/10

(54) **UPLINK LATENCY CONTROL METHOD AND CUSTOMER-PREMISES EQUIPMENT**
UPLINK-LATENZSTEUERUNGSVERFAHREN UND KUNDENSEITIGE AUSRÜSTUNG
PROCÉDÉ DE COMMANDE DE LATENCE DE LIAISON MONTANTE ET ÉQUIPEMENT DE LOCAUX DE CLIENT

(30) Priority: 06.04.2022 CN 202210357021
(43) Date of publication of application: 11.10.2023
(73) Proprietor: MitraStar Technology Corporation, 300 Hsinchu (TW)
(72) Inventor: LIN, Kuo-Ching, 300 Hsinchu (TW); GUO, Zong-Rong, 300 Hsinchu (TW)
(74) Representative: Becker, Eberhard

(56) References cited:
- US-A- 6 091 709
- US-B1- 10 505 851

## Description

### BACKGROUND

### Technical Field

The disclosure relates to a communication technology, in particular to an uplink latency control method and a customer-premises equipment.

### Description of Related Art

The explosive growth of network traffic generated by smartphones, tablet computers, and video streaming on the internet poses unique challenges for network congestion control. When network buffers are full or nearly full, incoming packets may be dropped. In order to avoid dropping packets, the conventional customer-premises equipment (CPE) provides as many buffers as possible. However, the buffers used to avoid packet loss may lead to highly increasing the packet's waiting time in the queue and the variation of the waiting time, thereby causing the issue of bufferbloat. Bufferbloat occurs when there are too many packets queued for transmission in the buffers of a network, and it results in high latency and latency variation. As more and more interactive applications (for example, voice over internet protocol, live video streaming, financial transactions, etc.) run over 4G/5G mobile networks, high latency and latency variation can degrade the performance of the applications.

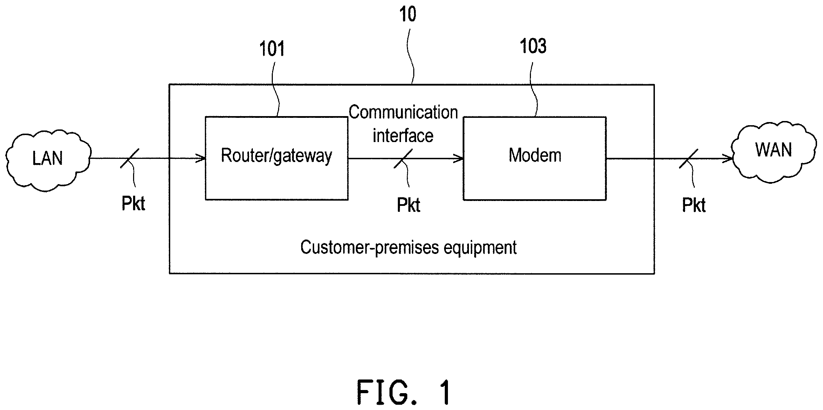

FIG. 1 is a schematic diagram of an uplink customer-premises equipment (CPE) processing a packet. A customer-premises equipment 10 includes a router/gateway 101 and a modem 103. In the conventional customer-premises equipment 10, the router/gateway 101 receives a packet Pkt from a local area network LAN. The router/gateway 101 forwards the packet Pkt to the modem 103 for processing via a communication interface. The modem 103 then transmits the processed packet Pkt to a wide area network WAN.

However, when the uplink bandwidth is constantly changing, since the customer-premises equipment 10 cannot know in advance the bandwidth to be allocated in the future, it is difficult to arrange the transmission scheduling and the transmission rate of uplink packets in advance. When the customer-premises equipment 10 is subjected to a burst of input packets from the local area network LAN, since the transmission scheduling and the transmission rate of the uplink packets cannot be adjusted, a bufferbloat may occur in the customer-premises equipment 10. Bufferbloat increases the latency of uplink high-priority packets (for example, DHCP ACK packets), and then reduces the throughput of downlink packets (for example, TCP packets), and that affects the service quality of the network. Therefore, there is an urgent need to design a technical solution for the conventional customer-premises equipment 10 to control high latency and latency variation, thereby providing a user with an ideal service quality.

US 10505851 B1 relates to a transmission burst control in a network device. US 6091709 A relates to a packet router for a data packet transmission network.

### SUMMARY

The invention is set out in the appended set of claims. The following disclosure serves a better understanding of the present invention. The disclosure provides an uplink latency control method and a customer-premises equipment, which can effectively reduce uplink latency, as disclosed by the appended claims.

Based on the above, with the uplink latency control method and the customer-premises equipment provided by the embodiments of the disclosure, the embodiments of the disclosure can instantly and adaptively adjust the packet transmission discipline of the queuing discipline manager according to the congestion condition of the network, and control the packet transmission between the queuing discipline manager and the network driver. The embodiments of the disclosure can solve the issue of bufferbloat occurred in the customer-premises equipment to effectively reduce uplink latency and improve the service quality of the customer-premises equipment.

### BRIEF DESCRIPTION OF THE DRAWINGS

FIG. 1 is a schematic diagram of an uplink customer-premises equipment processing a packet.
FIG. 2 is a schematic diagram of a customer-premises equipment according to an embodiment of the disclosure.
FIG. 3 is a flowchart of an uplink latency control method according to a first embodiment of the disclosure.
FIG. 4 is a flowchart of an uplink latency control method according to a second embodiment of the disclosure.
FIG. 5 is a flowchart of an uplink latency control method according to a third embodiment of the disclosure.

### DETAILED DESCRIPTION OF DISCLOSED EMBODIMENTS

Reference will now be made in detail to the exemplary embodiments of the disclosure, and examples of the exemplary embodiments are illustrated in the drawings. Wherever possible, the same reference signs are used in the drawings and description to refer to the same or similar parts.

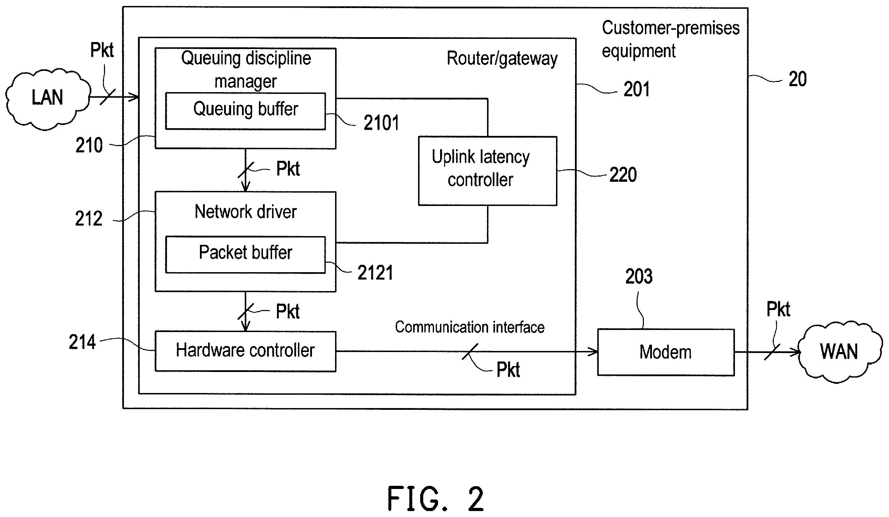

FIG. 2 is a schematic diagram of a customer-premises equipment according to an embodiment of the disclosure. As shown in FIG. 2, a customer-premises equipment 20 includes a router/gateway 201 and a modem 203. The router/gateway 201 includes a queuing discipline manager 210, a network driver 212, a hardware controller 214, and an uplink latency controller 220. The queuing discipline manager 210 includes a queuing buffer 2101. The network driver 212 includes a packet buffer 2121. The uplink latency controller 220 is coupled to the queuing discipline manager 210 and the network driver 212.

The customer-premises equipment 20 is a network terminal equipment located at the user end that interfaces with a telecommunication operator, such as a terminal equipment for accessing telephone or mobile network services. The customer-premises equipment 20 may be a local area network terminal equipment such as a telephone, a cable television set-top box and digital subscriber line (DSL) router, a server, a host, a wireless router, a switch, a firewall, and a Wi-Fi router, or may be a wide area network terminal equipment installed by a network service provider. During a process of uplink packet transmission, the customer-premises equipment 20 transmits a packet Pkt from a local area network LAN to a wide area network WAN.

In the embodiment of the disclosure, after the router/gateway 201 receives the packet Pkt from the local area network LAN, the packet Pkt may be stored in a buffer to wait for transmission processing. Specifically, the packet Pkt may be stored in the queuing buffer 2101 of the queuing discipline manager 210. The queuing discipline manager 210 may transmit the packet Pkt stored in the queuing buffer 2101 to the packet buffer 2121 of the network driver 212 to wait for transmission processing. The network driver 212 transmits the packet Pkt stored in the packet buffer 2121 to the hardware controller 214. Next, after the hardware controller 214 transmits the packet Pkt to the modem 203 for processing through a communication interface, the modem 203 transmits the processed packet Pkt to the wide area network WAN. The communication interface between the hardware controller 214 and the modem 203 may include a universal serial bus (USB) interface, an Ethernet network interface, a peripheral component interconnect express (PCI-E) interface, and/or other wired communication interfaces.

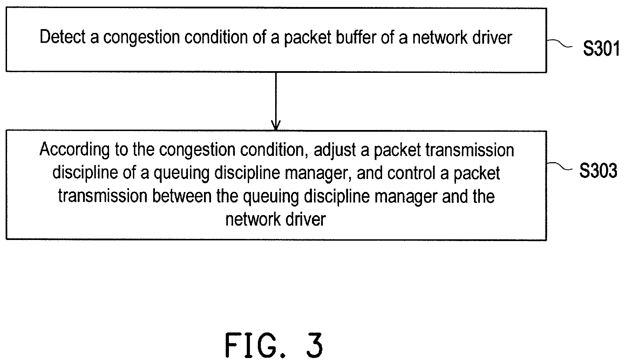

It should be noted that when a burst of packets Pkt from the local area network LAN causes uplink bandwidth overload, the issue of bufferbloat may occur in the queuing buffer 2101 or the packet buffer 2121. In the disclosure, the uplink latency controller 220 detects a congestion condition of the packet buffer 2121 of the network driver 212. Also, the uplink latency controller 220 adjusts a packet transmission discipline of the queuing discipline manager 210, and controls a packet transmission between the queuing discipline manager 210 and the network driver 220. Thereby, the uplink latency can be effectively reduced, and the service quality of the customer-premises equipment 20 can be improved. In other words, the customer-premises equipment 20 may be configured to execute an uplink latency control method shown in FIG. 3, FIG. 4, and/or FIG. 5 below to solve the issue of bufferbloat.

FIG. 3 is a flowchart of an uplink latency control method according to a first embodiment of the disclosure. The uplink latency control method shown in FIG. 3 is applicable to the customer-premises equipment 20 shown in FIG. 2. In Step S301, the uplink latency controller 220 detects the congestion condition of the packet buffer 2121 of the network driver 212. In Step S303, the uplink latency controller 220 adjusts the packet transmission discipline of the queuing discipline manager 210 according to the congestion condition of the packet buffer 2121, and controls the packet transmission between the queuing discipline manager 210 and the network driver 212. When the number of packets Pkt from the local area network LAN causes the uplink bandwidth to be overloaded, the uplink latency controller 220 may dynamically control the packet transmission between the queuing discipline manager 210 and the network driver 212 according to the congestion condition of the packet buffer 2121 to solve the issue of bufferbloat occurred in the queuing buffer 2101 or the packet buffer 2121.

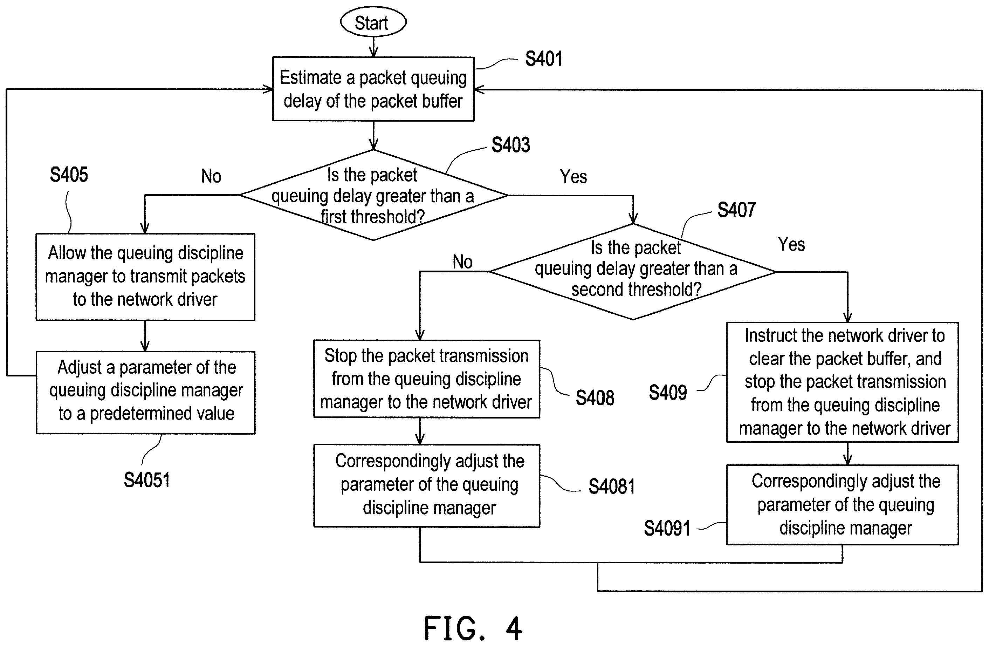

FIG. 4 is a flowchart of an uplink latency control method according to a second embodiment of the disclosure. The uplink latency control method shown in FIG. 4 is applicable to the customer-premises equipment 20 shown in FIG. 2.

In Step S401, the uplink latency controller 220 estimates a packet queuing delay of the packet buffer 2121. Specifically, the uplink latency controller 220 detects the congestion condition of the packet buffer 2121 of the network driver 212 by estimating the packet queuing delay of the packet buffer 2121. For example, the packet queuing delay of the packet buffer 2121 may be an average delay time of multiple uplink packets from entering the packet buffer 2121 to leaving the packet buffer 2121 (for example, being transmitted to the hardware controller 214). A longer packet queuing delay of the packet buffer 2121 may represent a more serious congestion condition of the packet buffer 2121. A first threshold is used to determine whether congestion occurs in the packet buffer 2121. In Step S403, the uplink latency controller 220 determines whether the packet queuing delay of the packet buffer 2121 is greater than the first threshold.

In Step S403, when it is determined that the packet queuing delay of the packet buffer 2121 is "not" greater than the first threshold, which means that no congestion occurs in the packet buffer 2121, the uplink latency controller 220 then executes Step S405 and/or Step S4051. In Step S405, the uplink latency controller 220 allows the queuing discipline manager 210 to transmit packets to the network driver 212. In Step S4051, the uplink latency controller 220 adjusts the parameter of the queuing discipline manager 210 to a predetermined value. In some embodiments of the disclosure, the uplink latency controller 220 may only execute Step S405 without executing Step S4051. Persons skilled in the art can execute Step S405 and/or Step S4051 in an appropriate order or combination according to different design requirements.

In Step S403, when it is determined that the packet queuing delay of the packet buffer 2121 is greater than the first threshold, the uplink latency controller 220 then executes Step S407, and the uplink latency controller 220 determines whether the packet queuing delay of the packet buffer 2121 is greater than a second threshold in Step S407. The second threshold is greater than the first threshold. The second threshold is used to determine the severity level of congestion when congestion occurs in the packet buffer 2121. The uplink latency controller 220 then adjusts and controls the queuing discipline manager 210 and the network driver 212 differently according to the severity level of congestion.

In Step S407, when it is determined that the packet queuing delay of the packet buffer 2121 is "not" greater than the second threshold, which means that the packet buffer 2121 is slightly congested, the uplink latency controller 220 then executes Step S408 and/or S4081. In Step S408, the uplink latency controller 220 stops the packet transmission from the queuing discipline manager 210 to the network driver 212. Specifically, the uplink latency controller 220 may configure a receiving interface state of the network driver 212 to be "disabled", which is equivalent to turning off the function of the network driver 212 to receive the packet Pkt, thereby stopping the packet transmission from the queuing discipline manager 210 to the network driver 212. Alternatively, the uplink latency controller 220 may instruct the queuing discipline manager 210 not to transmit the packet Pkt to the network driver 212 to stop the packet transmission from the queuing discipline manager 210 to the network driver 212. In Step S4081, the uplink latency controller 220 correspondingly adjusts the parameter of the queuing discipline manager 210. In some embodiments of the disclosure, the uplink latency controller 220 may only execute Step S408 without executing Step S4081. Persons skilled in the art can execute Step S408 and/or Step S4081 in an appropriate order or combination according to different design requirements.

In Step S407, when it is determined that the packet queuing delay of the packet buffer 2121 is greater than the second threshold, which means that the packet buffer 2121 is severely congested, the uplink latency controller 220 then executes Step S409 and/or S4091. In Step S409, the uplink latency controller 220 instructs the network driver 212 to drop every packet in the packet buffer 2121, and stop the packet transmission from the queuing discipline manager 210 to the network driver 212. In Step S4091, the uplink latency controller 220 correspondingly adjusts the parameter of the queuing discipline manager 210. In some embodiments of the disclosure, the uplink latency controller 220 may only execute Step S409 without executing Step S4091. Persons skilled in the art can execute Step S409 and/or Step S4091 in an appropriate order or combination according to different design requirements.

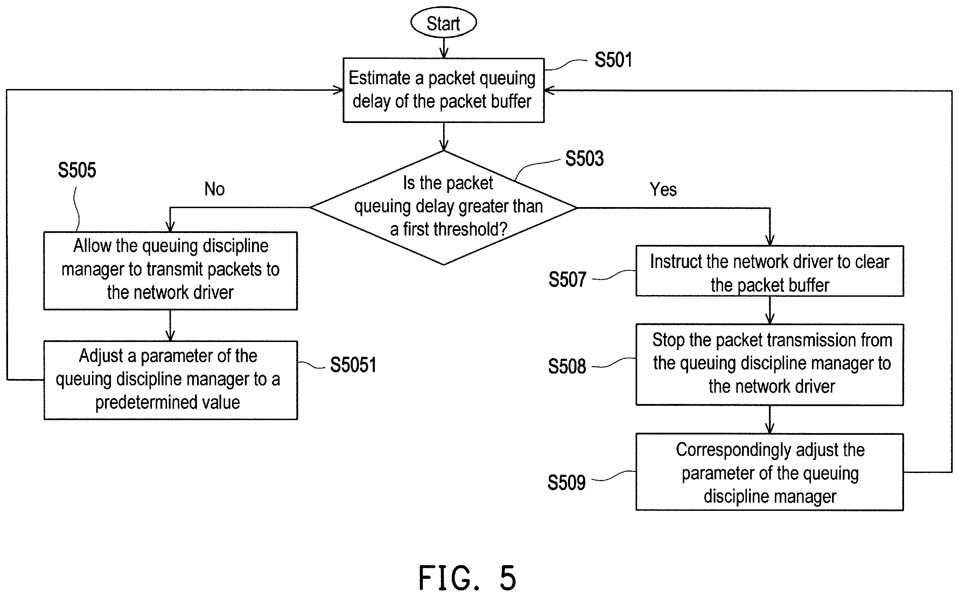

FIG. 5 is a flowchart of an uplink latency control method according to a third embodiment of the disclosure. The uplink latency control method shown in FIG. 5 is applicable to the customer-premises equipment 20 shown in FIG. 2.

In Step S501, the uplink latency controller 220 estimates the packet queuing delay of the packet buffer 2121. In Step S503, the uplink latency controller 220 determines whether the packet queuing delay of the packet buffer 2121 is greater than the first threshold.

In Step S503, when it is determined that the packet queuing delay of the packet buffer 2121 is "not" greater than the first threshold, which means that no congestion occurs in the packet buffer 2121, the uplink latency controller 220 then executes Step S505 and/or S5051. In Step S505, the uplink latency controller 220 allows the queuing discipline manager 210 to transmit packets to the network driver 212. In Step S5051, the uplink latency controller 220 adjusts the parameter of the queuing discipline manager 210 to the predetermined value.

In Step S503, when it is determined that the packet queuing delay of the packet buffer 2121 is "not" greater than the first threshold, which means that congestion occurs in the packet buffer 2121, the uplink latency controller 220 then executes Steps S507, S508, and/or S509. In Step S507, the uplink latency controller 220 instructs the network driver 212 to drop every packet in the packet buffer 2121. In Step S508, the uplink latency controller 220 stops the packet transmission from the queuing discipline manager 210 to the network driver 212. Specifically, the uplink latency controller 220 may configure the receiving interface state of the network driver 212 to be "disabled", which is equivalent to turning off the function of the network driver 212 to receive the packet Pkt, thereby stopping the packet transmission from the queuing discipline manager 210 to the network driver 212. Alternatively, the uplink latency controller 220 may instruct the queuing discipline manager 210 not to transmit the packet Pkt to the network driver 212 to stop the packet transmission from the queuing discipline manager 210 to the network driver 212. In Step S509, the uplink latency controller 220 correspondingly adjusts the parameter of the queuing discipline manager 210.

It should be noted that in the embodiment of the disclosure, the execution order of Step S505 and Step S5051 is not limited. In some embodiments of the disclosure, the uplink latency controller 220 may first execute Step S5051, and then execute Step S505. In some embodiments of the disclosure, the uplink latency controller 220 may only execute Step S505 without executing Step S5051. Persons skilled in the art can execute Step S505 and/or Step S5051 in an appropriate order or combination according to different design requirements. Likewise, in some embodiments of the disclosure, the execution order of Steps S507, S508, and/or S509 is not limited. Persons skilled in the art can execute Steps S507, S508, and/or S509 according to an appropriate order. In some embodiments of the disclosure, the uplink latency controller 220 may only execute Steps S507 and S508 without executing Step S509.

In some embodiments of the disclosure, the parameter of the queuing discipline manager 210 includes at least one of a target queuing delay, a latency measurement interval, and a queuing buffer length of the queuing discipline manager 210. The uplink latency controller 220 may correspondingly adjust the parameter of the queuing discipline manager 210 according to the detected congestion level of the packet buffer 2121. The target queuing delay is a target value of the allowable queuing delay of the queuing buffer 2101 of the queuing discipline manager 210, and is, for example, configured to be 20 milliseconds in an uncongested state and configured to be a higher value such as 30 milliseconds in a congested state. The latency measurement interval is the time interval that the queuing discipline manager 210 measures the queuing latency of the queuing buffer 2101. For example, in the uncongested state, the latency measurement interval is configured to be 100-200 milliseconds so that the queuing discipline manager 210 measures the queuing latency of the queuing buffer 2101 once every 100-200 milliseconds, and in the congested state, the latency measurement interval is configured to be a shorter value such as 50-80 milliseconds so that the queuing discipline manager 210 measures the queuing latency of the queuing buffer 2101 once every 50-80 milliseconds. The queuing buffer length is the length of the queuing buffer 2101 of the queuing discipline manager 210, which affects the number of packets that can be stored in the queuing discipline manager 210, and is, for example, configured to be a greater length in the uncongested state and configured to be a smaller length in the congested state. In some embodiments of the disclosure, the parameter of the queuing discipline manager 210 includes the parameter of the FlowQueue CoDel (FQ-CoDel) algorithm.

In some embodiments of the disclosure, the modem 203 provides a signal modulation or signal demodulation function for accessing different network types or corresponding to different network protocols, so that the customer-premises equipment 20 may be connected to the wide area network WAN, and perform data transmission and communication with the wide area network WAN. The network of the modem 203 may be implemented by a communication chip. The communication chip may support a wireless or wired communication network, such as a wired internet, an ultra wideband (UWB) network, a global system for mobile communication (GSM), a personal handy-phone system (PHS), a code division multiple access (CDMA) system, a wideband code division multiple access (WCDMA) system, a long term evolution (LTE) system, a worldwide interoperability for microwave access (WiMAX) system, and a wireless fidelity (Wi-Fi) system. The modem 203 may be an element supporting signal transmission of, for example, an Ethernet network, a third generation communication (3G) network, a fourth generation communication (4G) network, a fifth generation communication (5G) network, or a sixth generation communication (6G) network.

In some embodiments of the disclosure, the network driver 212 is one of a universal serial bus (USB) network driver, an Ethernet network driver, and a peripheral component interconnect express (PCI-E) network driver.

In some embodiments of the disclosure, the queuing buffer 2101 or the packet buffer 2121 may be, for example, any form of fixed or removable random access memory (RAM), readonly memory (ROM), flash memory, hard disk, other similar devices, or a combination of these devices, and is used to store the buffered packet Pkt.

In some embodiments of the disclosure, according to different design requirements, the block implementation manner of the queuing discipline manager 210, the network driver 212, the hardware controller 214, or the uplink latency controller 220 included in the router/gateway 201 may be in the form of hardware, firmware, software (that is, program), or a combination of multiple of the three.

In terms of the form of hardware, in some embodiments of the disclosure, the block of the queuing discipline manager 210, the network driver 212, the hardware controller 214, or the uplink latency controller 220 may be implemented in a logic circuit of an integrated circuit. The related block function of the queuing discipline manager 210, the network driver 212, the hardware controller 214, or the uplink latency controller 220 may be implemented as hardware using hardware description languages (for example, Verilog HDL or VHDL) or other suitable programming languages. For example, the related block function of the queuing discipline manager 210, the network driver 212, the hardware controller 214, or the uplink latency controller 220 may be implemented in one or more controllers, microcontrollers, microprocessors, application-specific integrated circuits (ASICs), digital signal processors (DSPs), field programmable gate arrays (FPGAs), and/or various logic blocks, modules, and circuits in the other processing units.

In terms of the form of software and/or the form of firmware, in some embodiments of the disclosure, the related block function of the queuing discipline manager 210, the network driver 212, the hardware controller 214, or the uplink latency controller 220 may be implemented as programming codes. For example, the block of the queuing discipline manager 210, the network driver 212, the hardware controller 214, or the uplink latency controller 220 may be implemented using general programming languages (for example, C, C++, or assembly languages) or other suitable programming languages. The programming code may be recorded/stored in a recording medium. In some embodiments, the recording medium includes, for example, a readonly memory (ROM), a storage device and/or random access memory (RAM), a flash memory, a hard disk, other similar device, or a combination of the devices. In other embodiments, the recording medium may include a non-transitory computer readable medium. For example, the non-transitory computer readable medium may be implemented using a tape, a disk, a card, a semiconductor memory, a programmable logic circuit. A computer, a central processing unit (CPU), a controller, a microcontroller, or a microprocessor may read and execute the programming code from the recording medium, thereby implementing the related block function of the queuing discipline manager 210, the network driver 212, the hardware controller 214, or the uplink latency controller 220.

In summary, the uplink latency control method and the customer-premises equipment provided by the embodiments of the disclosure can instantly and adaptively adjust the packet transmission discipline of the queuing discipline manager according to the congestion condition of the network, and control the packet transmission between the queuing discipline manager and the network driver. Thereby, the embodiments of the disclosure can solve the issue of bufferbloat occurred in the customer-premises equipment to effectively reduce uplink latency and improve the service quality of the customer-premises equipment.

Finally, it should be noted that the above embodiments are only used to illustrate, but not to limit, the technical solutions of the disclosure, the scope of the invention is defined by the appended claims. Although the disclosure has been described in detail with reference to the above embodiments, persons skilled in the art should understand that the technical solutions described in the above embodiments can still be modified or some or all of the technical features thereof can be equivalently replaced, as long as they do not depart from the scope of the invention as it is depicted by the appended claims.

### [Description of the Reference Signs]

10, 20: customer-premises equipment
101, 201: router/gateway
103, 203: modem
210: queuing discipline manager
212: network driver
214: hardware controller
220: uplink latency controller
2101: queuing buffer
2121: packet buffer
LAN: local area network
WAN: wide area network
Pkt: packet
S301, S303, S401, S403, S405, S407, S408, S409, S4051, S4081, S4091, S501, S503, S505, S5051, S507, S508, S509: Step

## Claims

1. An uplink latency control method, comprising:
detecting, through an uplink latency controller (220) of a customer premises equipment (10, 20), a congestion condition of a packet buffer (2121) of a network driver (212); and
according to the congestion condition, adjusting, through the uplink latency controller (220) of the customer premises equipment (10, 20), a packet transmission discipline of a queuing discipline manager (210), and controlling, through the uplink latency controller (220) of the customer premises equipment (10, 20), a packet transmission between the queuing discipline manager (210) and the network driver (212),
wherein the step of detecting the congestion condition of the packet buffer (2121) of the network driver (212) further comprises:
estimating a packet queuing delay of the packet buffer (2121),
wherein the step of controlling the packet transmission between the queuing discipline manager (210) and the network driver (212) further comprises:
in response to the packet queuing delay of the packet buffer (2121) being greater than a first threshold, stopping the packet transmission from the queuing discipline manager (210) to the network driver (212); and
in response to the packet queuing delay of the packet buffer (2121) being greater than a second threshold, instructing the network driver (212) to drop every packet in the packet buffer (2121), wherein the second threshold is greater than the first threshold.

2. The uplink latency control method according to claim 1, wherein the step of adjusting the packet transmission discipline of the queuing discipline manager (210) further comprises:
in response to the packet queuing delay of the packet buffer (2121) being greater than the first threshold, correspondingly adjusting a parameter of the queuing discipline manager (210).

3. The uplink latency control method according to claim 1 or 2, wherein
the step of controlling the packet transmission between the queuing discipline manager (210) and the network driver (212) further comprises: in response to the packet queuing delay of the packet buffer (2121) being not greater than a first threshold, allowing the packet transmission from the queuing discipline manager (210) to the network driver (212).

4. The uplink latency control method according to claim 3, wherein the step of adjusting the packet transmission discipline of the queuing discipline manager (210) further comprises: in response to the packet queuing delay of the packet buffer (2121) being not greater than the first threshold, adjusting a parameter of the queuing discipline manager (210) to a predetermined value.

5. The uplink latency control method according to claim 2 or 4, wherein the parameter comprises at least one of a target queuing delay, a latency measurement interval, and a queuing buffer length.

6. A customer-premises equipment (10, 20), comprising:
a queuing discipline manager (210), comprising a queuing buffer (2101);
a network driver (212), comprising a packet buffer (2121); and
an uplink latency controller (220), coupled to the queuing discipline manager (210) and the network driver (212), **characterized in that**, wherein the uplink latency controller (220) is configured to:
detect a congestion condition of the packet buffer (2121) of the network driver (212);
according to the congestion condition, adjust a packet transmission discipline of the queuing discipline manager (210), and control a packet transmission between the queuing discipline manager (210) and the network driver (212);
estimate a packet queuing delay of the packet buffer (2121); and
in response to the packet queuing delay of the packet buffer (2121) being greater than a first threshold, stop the packet transmission from the queuing discipline manager (210) to the network driver (212); and
in response to the packet queuing delay of the packet buffer (2121) being greater than a second threshold, instruct the network driver (212) to drop every packet in the packet buffer (2121), wherein the second threshold is greater than the first threshold.

7. The customer-premises equipment (10, 20) according to claim 6, wherein the uplink latency controller (220) is further configured to:
in response to the packet queuing delay of the packet buffer (2121) being greater than the first threshold, correspondingly adjust a parameter of the queuing discipline manager (210).

8. The customer-premises equipment (10, 20) according to 6 or 7, wherein the uplink latency controller (220) is further configured to:
in response to the packet queuing delay of the packet buffer (2121) being not greater than a first threshold, allow the packet transmission from the queuing discipline manager (210) to the network driver (212).

9. The customer-premises equipment (10, 20) according to claim 8, wherein the uplink latency controller (220) is further configured to:
in response to the packet queuing delay of the packet buffer (2121) being not greater than the first threshold, adjust a parameter of the queuing discipline manager (210) to a predetermined value.

10. The customer-premises equipment (10, 20) according to claims 7 or 9, wherein the parameter comprises at least one of a target queuing delay, a latency measurement interval, and a queuing buffer length.

11. The customer-premises equipment (10, 20) according to any of claims 6-10, wherein the network driver (212) is one of a USB network driver, an Ethernet network driver, and a PCI-E network driver.

## Patentansprüche

1. Uplink-Latenzsteuerungsverfahren umfassend:
Detektieren, durch eine Uplink-Latenzsteuerung (220) einer kundenseitigen Ausrüstung (10, 20), eines Überlastungszustands eines Paketpuffers (2121) eines Netzwerktreibers (212); und
gemäß dem Überlastungszustand, anpassen einer Paketübertragungsdisziplin eines Warteschlangendisziplinmanagers (210) durch die Uplink-Latenzsteuerung (220) der kundenseitigen Ausrüstung (10, 20) und Steuern einer Paketübertragung zwischen dem Warteschlangendisziplinmanager (210) und dem Netzwerktreiber (212) durch die Uplink-Latenzsteuerung (220) der kundenseitigen Ausrüstung (10, 20),
wobei der Schritt des Detektierens des Überlastungszustands des Paketpuffers (2121) des Netzwerktreibers (212) ferner umfasst:
Schätzen einer Paketwarteschlangenverzögerung des Paketpuffers (2121),
wobei der Schritt des Steuerns der Paketübertragung zwischen dem Warteschlangendisziplinmanager (210) und dem Netzwerktreiber (212) ferner umfasst:
als Reaktion darauf, dass die Paketwarteschlangenverzögerung des Paketpuffers (2121) größer als ein erster Schwellenwert ist, Stoppen der Paketübertragung von dem Warteschlangendisziplinmanager (210) zum Netzwerktreiber (212); und
als Reaktion darauf, dass die Paketwarteschlangenverzögerung des Paketpuffers (2121) größer als ein zweiter Schwellenwert ist, Anweisen des Netzwerktreibers (212), jedes Paket im Paketpuffer (2121) zu verwerfen, wobei der zweite Schwellenwert größer ist als der erste Schwellenwert.

2. Uplink-Latenzsteuerungsverfahren nach Anspruch 1, wobei der Schritt des Anpassens der Paketübertragungsdisziplin des Warteschlangendisziplinmanagers (210) ferner umfasst:
als Reaktion darauf, dass die Paketwarteschlangenverzögerung des Paketpuffers (2121) größer als der erste Schwellenwert ist, entsprechend Anpassen eines Parameters des Warteschlangendisziplinmanagers (210).

3. Uplink-Latenzsteuerungsverfahren nach Anspruch 1 oder 2, wobei
der Schritt des Steuerns der Paketübertragung zwischen dem Warteschlangendisziplinmanager (210) und dem Netzwerktreiber (212) ferner umfasst: als Reaktion darauf, dass die Paketwarteschlangenverzögerung des Paketpuffers (2121) nicht größer als ein erster Schwellenwert ist, Zulassen der Paketübertragung von dem Warteschlangendisziplinmanager (210) zu dem Netzwerktreiber (212).

4. Uplink-Latenzsteuerungsverfahren nach Anspruch 3, wobei der Schritt des Anpassens der Paketübertragungsdisziplin des Warteschlangendisziplinmanagers (210) ferner umfasst: als Reaktion darauf, dass die Paketwarteschlangenverzögerung des Paketpuffers (2121) nicht größer als der erste Schwellenwert ist, Anpassen eines Parameters des Warteschlangendisziplinmanagers (210) auf einen vorbestimmten Wert.

5. Uplink-Latenzsteuerungsverfahren nach Anspruch 2 oder 4, wobei der Parameter mindestens eines von einer Zielwarteschlangenverzögerung, einem Latenzmessintervall und einer Warteschlangenpufferlänge umfasst.

6. Kundenseitige Ausrüstung (10, 20), umfassend:
einen Warteschlangendisziplinmanager (210), der einen Warteschlangenpuffer (2101) umfasst;
einen Netzwerktreiber (212), der einen Paketpuffer (2121) umfasst; und
eine Uplink-Latenzsteuerung (220), die mit dem Warteschlangendisziplinmanager (210) und dem Netzwerktreiber (212) gekoppelt ist, **dadurch gekennzeichnet, dass** die Uplink-Latenzsteuerung (220) dazu eingerichtet ist:
einen Überlastungszustand des Paketpuffers (2121) des Netzwerktreibers (212) zu detektieren;
gemäß dem Überlastungszustand eine Paketübertragungsdisziplin des Warteschlangendisziplinmanagers (210) anzupassen und eine Paketübertragung zwischen dem Warteschlangendisziplinmanager (210) und dem Netzwerktreiber (212) zu steuern;
eine Paketwarteschlangenverzögerung des Paketpuffers (2121) zu schätzen; und
als Reaktion darauf, dass die Paketwarteschlangenverzögerung des Paketpuffers (2121) größer als ein erster Schwellenwert ist, die Paketübertragung von dem Warteschlangendisziplinmanager (210) zu dem Netzwerktreiber (212) zu stoppen; und
als Reaktion darauf, dass die Paketwarteschlangenverzögerung des Paketpuffers (2121) größer als ein zweiter Schwellenwert ist, den Netzwerktreiber (212) anzuweisen, jedes Paket im Paketpuffer (2121) zu verwerfen, wobei der zweite Schwellenwert größer ist als der erste Schwellenwert.

7. Kundenseitige Ausrüstung (10, 20) nach Anspruch 6, wobei die Uplink-Latenzsteuerung (220) ferner dazu eingerichtet ist:
als Reaktion darauf, dass die Paketwarteschlangenverzögerung des Paketpuffers (2121) größer als der erste Schwellenwert ist, einen Parameter des Warteschlangendisziplinmanagers (210) entsprechend anzupassen.

8. Kundenseitige Ausrüstung (10, 20) nach Anspruch 6 oder 7, wobei die Uplink-Latenzsteuerung (220) ferner eingerichtet ist:
als Reaktion darauf, dass die Paketwarteschlangenverzögerung des Paketpuffers (2121) nicht größer als ein erster Schwellenwert ist, die Paketübertragung von dem Warteschlangendisziplinmanager (210) zu dem Netzwerktreiber (212) zuzulassen.

9. Kundenseitige Ausrüstung (10, 20) nach Anspruch 8, wobei die Uplink-Latenzsteuerung (220) ferner dazu eingerichtet ist:
als Reaktion darauf, dass die Paketwarteschlangenverzögerung des Paketpuffers (2121) nicht größer als der erste Schwellenwert ist, einen Parameter des Warteschlangendisziplinmanagers (210) auf einen vorbestimmten Wert anzupassen.

10. Kundenseitige Ausrüstung (10, 20) nach Anspruch 7 oder 9, wobei der Parameter mindestens eines von einer Zielwarteschlangenverzögerung, einem Latenzmessintervall und einer Warteschlangenpufferlänge umfasst.

11. Kundenseitig Ausrüstung (10, 20) nach einem der Ansprüche 6 bis 10, wobei der Netzwerktreiber (212) ein USB-Netzwerktreiber, ein Ethernet-Netzwerktreiber oder ein PCI-E-Netzwerktreiber ist.

## Revendications

1. Procédé de contrôle de latence de liaison montante, comprenant :
la détection, via un contrôleur de latence de liaison montante (220) d'un équipement de locaux client (10, 20), d'une condition de congestion d'un tampon de paquets (2121) d'un pilote réseau (212) ; et
en fonction de la condition de congestion, l'ajustement, via le contrôleur de latence de liaison montante (220) de l'équipement de locaux client (10, 20), d'une discipline de transmission de paquets d'un gestionnaire de discipline de file d'attente (210), et le contrôle, via le contrôleur de latence de liaison montante (220) de l'équipement de locaux client (10, 20), d'une transmission de paquets entre le gestionnaire de discipline de file d'attente (210) et le pilote réseau (212),
dans lequel l'étape de détection de la condition de congestion du tampon de paquets (2121) du pilote réseau (212) comprend en outre :
l'estimation d'un délai de mise en file d'attente de paquets du tampon de paquets (2121),
dans lequel l'étape de contrôle de la transmission de paquets entre le gestionnaire de discipline de file d'attente (210) et le pilote réseau (212) comprend en outre :
en réponse au fait que le délai de mise en file d'attente de paquets du tampon de paquets (2121) soit supérieur à un premier seuil, l'arrêt de la transmission de paquets du gestionnaire de discipline de file d'attente (210) au pilote réseau (212) ; et
en réponse au fait que le délai de mise en file d'attente de paquets du tampon de paquets (2121) soit supérieur à un deuxième seuil, la commande au pilote réseau (212) d'omettre chaque paquet dans le tampon de paquets (2121), dans lequel le deuxième seuil est supérieur au premier seuil.

2. Procédé de contrôle de latence de liaison montante selon la revendication 1, dans lequel l'étape d'ajustement de la discipline de transmission de paquets du gestionnaire de discipline de file d'attente (210) comprend en outre :
en réponse au fait que le délai de mise en file d'attente de paquets du tampon de paquets (2121) soit supérieur au premier seuil, l'ajustement correspondant d'un paramètre du gestionnaire de discipline de file d'attente (210).

3. Procédé de contrôle de latence de liaison montante selon la revendication 1 ou 2, dans lequel
l'étape de contrôle de la transmission de paquets entre le gestionnaire de discipline de file d'attente (210) et le pilote réseau (212) comprend en outre : en réponse au fait que le délai de mise en file d'attente de paquets du tampon de paquets (2121) ne soit pas supérieur à un premier seuil, l'habilitation de la transmission de paquets du gestionnaire de discipline de file d'attente (210) au pilote réseau (212).

4. Procédé de contrôle de latence de liaison montante selon la revendication 3, dans lequel l'étape d'ajustement de la discipline de transmission de paquets du gestionnaire de discipline de file d'attente (210) comprend en outre : en réponse au fait que le délai de mise en file d'attente de paquets du tampon de paquets (2121) ne soit pas supérieur au premier seuil, l'ajustement d'un paramètre du gestionnaire de discipline de file d'attente (210) à une valeur prédéterminée.

5. Procédé de contrôle de latence de liaison montante selon la revendication 2 ou 4, dans lequel le paramètre comprend au moins un élément parmi un délai de mise en file d'attente cible, un intervalle de mesure de latence et une longueur de tampon de mise en file d'attente.

6. Équipement de locaux client (10, 20), comprenant :
un gestionnaire de discipline de file d'attente (210), comprenant un tampon de mise en file d'attente (2101) ;
un pilote réseau (212), comprenant un tampon de paquets (2121) ; et
un contrôleur de latence de liaison montante (220), couplé au gestionnaire de discipline de file d'attente (210) et au pilote réseau (212),
**caractérisé en ce que** le contrôleur de latence de liaison montante (220) est configuré pour :
la détection d'une condition de congestion du tampon de paquets (2121) du pilote réseau (212) ;
en fonction de la condition de congestion, l'ajustement d'une discipline de transmission de paquets du gestionnaire de discipline de file d'attente (210), et le contrôle d'une transmission de paquets entre le gestionnaire de discipline de file d'attente (210) et le pilote réseau (212) ;
l'estimation d'un délai de mise en file d'attente de paquets du tampon de paquets (2121) ; et
en réponse au fait que le délai de mise en file d'attente de paquets du tampon de paquets (2121) soit supérieur à un premier seuil, l'arrêt de la transmission de paquets du gestionnaire de discipline de file d'attente (210) au pilote réseau (212) ; et
en réponse au fait que le délai de mise en file d'attente de paquets du tampon de paquets (2121) soit supérieur à un deuxième seuil, la commande au pilote réseau (212) d'omettre chaque paquet dans le tampon de paquets (2121), dans lequel le deuxième seuil est supérieur au premier seuil.

7. Équipement de locaux client (10, 20) selon la revendication 6, dans lequel le contrôleur de latence de liaison montante (220) est en outre configuré pour :
en réponse au fait que le délai de mise en file d'attente de paquets du tampon de paquets (2121) soit supérieur au premier seuil, l'ajustement correspondant d'un paramètre du gestionnaire de discipline de file d'attente (210).

8. Équipement de locaux client (10, 20) selon la revendication 6 ou 7, dans lequel le contrôleur de latence de liaison montante (220) est en outre configuré pour :
en réponse au fait que le délai de mise en file d'attente de paquets du tampon de paquets (2121) ne soit pas supérieur à un premier seuil, l'habilitation de la transmission de paquets du gestionnaire de discipline de file d'attente (210) au pilote réseau (212).

9. Équipement de locaux client (10, 20) selon la revendication 8, dans lequel le contrôleur de latence de liaison montante (220) est en outre configuré pour :
en réponse au fait que le délai de mise en file d'attente de paquets du tampon de paquets (2121) ne soit pas supérieur au premier seuil, l'ajustement d'un paramètre du gestionnaire de discipline de file d'attente (210) à une valeur prédéterminée.

10. Équipement de locaux client (10, 20) selon la revendication 7 ou 9, dans lequel le paramètre comprend au moins un élément parmi un délai de mise en file d'attente cible, un intervalle de mesure de latence et une longueur de tampon de mise en file d'attente.

11. Équipement de locaux client (10, 20) selon l'une quelconque des revendications 6 à 10, dans lequel le pilote réseau (212) est un pilote parmi un pilote réseau USB, un pilote réseau Ethernet et un pilote réseau PCI-E.
